# EUROPEAN PATENT SPECIFICATION

(11) **EP 4 163 127 B1**
(45) Date of publication and mention of the grant of the patent: **25.11.2026**
(21) Application number: 22199394.2
(22) Date of filing: 03.10.2022
(51) Int. Cl.: B60C 1/00, C08K 3/36, C08K 5/20, C08L 7/00, C08L 9/00, C08L 9/06, C08L 57/02

(54) **RUBBER COMPOSITION AND TIRE**
KAUTSCHUKZUSAMMENSETZUNG UND REIFEN
COMPOSITION DE CAOUTCHOUC ET PNEUMATIQUE

(30) Priority: 11.10.2021 US 202163254277 P; 27.07.2022 US 202217815232
(43) Date of publication of application: 12.04.2023
(73) Proprietor: The Goodyear Tire & Rubber Company, Akron, OH 44316 (US)
(72) Inventor: ANYFANTAKI, Karmena Izabela, L-7257 Helmsange (LU); JACOBY, Claude Charles, L-6615 Wasserbillig (LU)
(74) Representative: Leslie, Edward

(56) References cited:
- EP-A1- 3 296 354
- EP-A1- 3 459 996
- EP-A1- 3 594 282
- EP-A1- 3 896 125
- EP-A1- 3 913 018
- WO-A1-99/48964
- US-A1- 2014 230 984
- US-A1- 2018 194 934
- US-A1- 2018 362 740

## Description

### Field of the Invention

This invention relates to a rubber composition, in particular for a tire or one of its rubber components. Moreover, the present invention is directed to a tire or a rubber component of a tire comprising such a rubber composition.

### Background of the Invention

In view of a continuing demand for improved tire performance, new material combinations are constantly being evaluated and tested by tire manufacturers. In particular, the treads of winter tires and/or all season tires may include large amounts of inorganic fillers, such as silica. High loadings of inorganic fillers serve to improve the wet performance characteristics of tires. However, the utilization of such inorganic fillers has certain drawbacks including impaired rubber processability and a reduction of the tensile strength of the rubber composition. While in many cases it may be possible to improve rubber processability by incorporating plasticizing liquids into rubber formulations, the difficulty associated with providing a sufficient level of tensile strength at high levels of inorganic filler loading remains to be a problem. EP 3459996 A1 describes a rubber composition in the same technical field.

### Summary of the Invention

The invention relates to a rubber composition in accordance with claim 1 and to a tire in accordance with claim 13.

Dependent claims refer to preferred embodiments of the invention.

A first object of the present invention is to provide a rubber composition which provides advanced wet traction properties when used in tire tread rubber formulations and which at the same time offers good tensile properties.

Another object of the present invention is to provide a rubber composition having good tensile properties and/or reasonable wear resistance, such as a level of wear resistance that can provide tire with a longer tread-life.

Another object of the present invention is to provide a rubber composition with desirable wet performance indicators, such as those which are indicative of better tire wet performance characteristics.

Yet another object of the present invention is to provide a rubber composition exhibiting a good compromise between hysteresis properties (rolling resistance), tensile properties and/or wet performance.

In a first aspect, the present invention is directed to a rubber composition comprising from 30 to 100 phr of at least one styrene-butadiene rubber; from 0 to 70 phr of at least one further diene-based elastomer; from 130 to 200 phr of silica; from 40 to 80 phr of a hydrocarbon resin; and at least 0.1 phr of one or more of amino fatty acids and fatty acid amides.

Surprisingly, it has been found that the tensile strength of a rubber composition can be improved by the inclusion of amino fatty acids and/or fatty acid amides therein. While other plasticizing materials may have been used in the past for processing reasons, it has been found that such materials can also significantly improve the tensile strength. The use of amino fatty acids and/or fatty acid amides in rubber formulations which are highly silica filled provides especially good results.

In a preferred embodiment, the styrene-butadiene rubber is functionalized for being coupling to silica. For example, the styrene-butadiene rubber may be a functionalized styrene-butadiene rubber, preferably a functionalized solution-polymerized styrene butadiene rubber.

Such a functionalized rubber may, for instance, be functionalized with one or more of the following groups: hydroxy groups, epoxy groups, siloxy groups, amino groups, siloxane groups, silane groups, silanol groups, amino siloxane groups, amino silane groups, alkoxysilane groups, silyl groups, and carboxy groups.

In a preferred embodiment, the styrene-butadiene rubber has a bound styrene content of 3% to 30%, preferably from 4% to 25%, or even more preferably from 5% to 20%.

Such a styrene-butadiene rubber which is plasticized with a conventional plasticizer may provide advanced winter performance, such as improved traction characteristics on snow and ice, when incorporated into the treads of winter tires or all-season tires. However, the use of such conventional styrene-butadiene rubber frequently leads to reduced tensile strength. The inclusion of one or more amino fatty acids and/or fatty acid amides in styrene-butadiene rubber formulations aids in plasticizing the rubber formulation, but does not have a negative impact on the tensile strength of the rubber formulation.

In a preferred embodiment, the rubber composition comprises from 30 to 75 phr of the styrene-butadiene rubber (optionally functionalized) and from 25 to 70 phr of the at least one further diene-based rubber. Preferably, the rubber composition comprises at least 35 phr of the styrene-butadiene rubber.

In a preferred embodiment, the at least one further diene based elastomer is selected from the group of polybutadiene rubber, synthetic polyisoprene rubber, and natural rubber.

In a preferred embodiment, the further diene based rubber is relatively high cis-1,4-polybutadiene rubber with a cis 1,4-content of preferably at least 90% or at least 95%.

In a preferred embodiment, the further diene based rubber is natural rubber and/or synthetic polyisoprene rubber.

The rubber composition comprises from 130 to 200 phr of silica, more preferably from 140 to 200 phr of silica.

In a preferred embodiment, the rubber composition comprises from 0.1 to 10 phr of the one or more of amino fatty acids or fatty acid amides, preferably from 0.2 to 8 phr, or even more preferably from 0.3 to 6 phr.

It has been found that such amounts are already sufficient to achieve a considerable effect on the tensile strength but also on wet performance and hysteresis. Higher levels may impair other properties such as stiffness or cure speed.

In a preferred embodiment, the styrene-butadiene rubber has a glass transition temperature within a range of -50°C to -86°C, preferably from -55°C to -80°C, or from -55°C to -70°C, or from -56°C to -69°C.

Thus, the styrene butadiene rubber has preferably a relatively low glass transition temperature. For instance, this is preferably combined in an embodiment with a resin of relatively high glass transition temperature.

In a preferred embodiment, the further diene based elastomer is a polybutadiene rubber having a glass transition temperature within a range of from -90 °C to -115 °C, preferably from -95°C to -110°C.

A glass transition temperature (Tg) for polymers/elastomers is determined as a peak midpoint by a differential scanning calorimeter (DSC) at a temperature rate of increase of 10°C per minute, according to ASTM D3418 or equivalent.

In a preferred embodiment, the hydrocarbon resin is solid at 23°C.

Thus, the hydrocarbon resin is not a liquid plasticizer. However, it may still have a plasticizing effect during mixing of the rubber composition under typical mixing conditions, such as at temperatures within the range of 100°C to 160°C.

In a preferred embodiment, the hydrocarbon resin is chosen from one or more of: aliphatic (C5) resins, aromatic (C9) resins, cyclopentadiene (CPD) resins, dicyclopentadiene (DCPD) resins, coumarone indene resins, terpene resins, styrene/α-methyl-styrene resins, terpene phenol resins, or combinations of those.

In a preferred embodiment, the hydrocarbon resin has a glass transition temperature within a range of from 35°C to 90°C.

A glass transition temperature for resins is determined as a peak midpoint by a differential scanning calorimeter (DSC) at a temperature rate of increase of 10°C per minute, according to ASTM D6604 or equivalent.

The rubber composition comprises from 40 phr to 80 phr of the hydrocarbon resin.

In a preferred embodiment, the hydrocarbon resin has a softening point within a range of 80°C to 140°C, preferably within a range of 90°C to 130°C. Thus, the resin may also have a plasticizing effect during mixing of the rubber composition.

A softening point of hydrocarbon resins is determined according to ASTM E28, or equivalent, which might sometimes be referred to as a ring and ball softening point.

The rubber composition further comprises 5 phr to 30 phr of liquid plasticizer. Liquid means herein that the material is in a liquid state at 23°C.

In a preferred embodiment, the liquid plasticizer is chosen from one or more of oils and liquid polymers.

In a preferred embodiment, the rubber composition comprises at least 5 phr of a vegetable oil, optionally having a glass transition temperature within a range of from -75°C to-100°C.

The glass transition temperature for oils is determined as a peak midpoint by a differential scanning calorimeter (DSC) at a temperature rate of increase of 10°C per minute, according to ASTM E1356 or equivalent.

In a preferred embodiment, the hydrocarbon resin has a weight average molecular weight (Mw) within a range of 500 to 2000 g/mol, preferably within a range of 500 to 1600 g/mol. Mn (number average molecular weight), Mw (weight average molecular weight) and Mz (z average molecular weight) are determined using gel permeation chromatography (GPC) according to ASTM 5296-11 using polystyrene calibration standards.

In a preferred embodiment, the rubber composition comprises a plasticizer composition comprising i) the one or more of amino fatty acids and fatty acid amides, and ii) fatty acids. Said plasticizer composition has optionally one or more of: an acid number within a range of 50 to 200 mg KOH/g, an acid number within a range of 90 to 200 mg KOH/g, and a dropping point within the range of 50°C to 100°C. The acid number is determined according to ISO 2114 or equivalent. Even more preferably, said acid number is within a range of 100 to 160 mg KOH/g. A dropping point is determined according to DIN ISO 2176:1997 or equivalent. Preferably, the dropping point is within a range of 60°C to 90°C.

In a preferred embodiment, the amino fatty acids are based on the reaction of fatty acids with amino acids. In other words, the amino fatty acid is the reaction product of a fatty acid with an amino acid. The amino acid will typically be an α-amino carboxylic acid of the general formula: 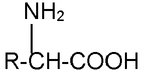 wherein R represents a hydrogen atom (in the case of glycine) or a substituent group containing from 1 to 12 carbon atoms which can contain aromatic rings and heteroatoms, including nitrogen, oxygen, sulfur, and halogens. For instance, R can represent an alkyl group containing from 1 to 12 or an alkaryl group containing from 1 to 12 carbon atoms. Some representative examples of suitable amino acids include any of the 26 amino acids found in proteins including alanine, arginine, asparagine, aspartic acid, cysteine, cystine, dibromotyrosine, diiodotyrosine, glutamic acid, glutamine, glycine, histidine, hydroxylysine, hydroxyproline, isoleucine, leucine, lysine, methionine, phenylalanine, proline, serine, threonine, thyroxine, tryptophane, tyrosine, and valine. All of these amino acids are α-amino carboxylic acids with the amino group in proline and hydroxyproline forming part of a pyrrolidine ring.

In a preferred embodiment, said amino acids are selected from the group consisting of glycine, alanine, valine, leucine, isoleucine, and proline. However, a wide variety of other amino acids known to the person skilled in the art may be utilized in synthesizing the amino fatty acids employed in the practice of this invention.

The fatty acids utilized in making the amino fatty acids utilized in the practice of this invention are typically of the general structural formula: R-COOH, wherein R represents an alkyl group containing from 2 to 17 carbon atoms. As a result of their biosynthesis route naturally occurring fatty acids contain an even number of carbon atoms with the exception of naturally occurring fatty acids that contain 3 or 5 carbon atoms. Accordingly, the fatty acids used in making the amino fatty acids employed in the practice of this invention will typically contain an even number of carbon atoms. In yet another embodiment, said fatty acids are selected from the list of caprylic acid, capric acid, lauric acid, myristic acid, palmitic acid, stearic acid, arachidic acid, behenic acid, lignoceric acid and cerotic acid. Also, further fatty acids might be used. One or more of these fatty acids can also be present as such in the plasticizer composition.

The reaction between the amino acid and the fatty acid can be depicted as follows: 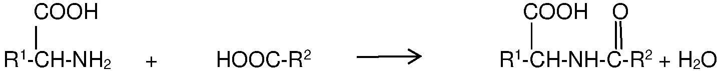 wherein R¹ represents the substituent group in the amino acid and wherein R² represents the alkyl group in the fatty acid. Accordingly, the amino fatty acids employed in the practice of this invention will typically be of the formula: R¹-CH(COOH)-NH-CO-R² wherein again R¹ represents the substituent group from the amino acid and wherein R² represents the alkyl group from the fatty acid.

In a preferred embodiment, the fatty acid amides are employed in styrene-butadiene rubber formulations. These fatty acid amides are based on the reaction of fatty acids with amines. The fatty acids could be those mentioned above and/or others, e.g., unsaturated fatty acids, including one or more of myristoleic acid, palmitoleic acid, sapienic acid, oleic acid, elaidic acid, vaccenic acid, linoleic acid, linoelaidic acid, α-Linolenic acid, arachidonic acid, eicosapentaenoic acid, erucic acid and docosahexaenoic acid. Oleic acid may be preferred. Suitable amines are known to the person skilled in the art. The amine will typically be a primary amine of the formula: RN₂, wherein R represents an alkyl group or an aryl group containing from 1 to 12 carbon atoms. Some representative examples of amines that can be used include methylamine, ethylamine, n-propylamine, iso-propylamine, n-butylamine, iso-butylamine, tert-butylamine, cyclohexylamine, benzylamine, α-phenylethylamine, β-phenylethylamine, aniline, o-methylaniline, m-methylaniline, p-methylaniline, o-bromolaniline, m-bromoaniline, p-bromoaniline, o-chloroaniline, m-chloroaniline, p-chloroaniline, and the like.

The reaction between the anine and the fatty acid can be depicted as follows: 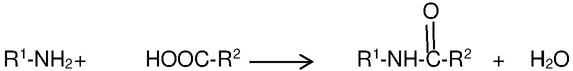 wherein R¹ represents alkyl group in the amine and wherein R² represents the alkyl group in the fatty acid. Accordingly, the fatty acid amides employed in the practice of this invention will typically be of the formula: R¹-NH-CO-R² wherein again R¹ represents the substituent group from the amino acid and wherein R² represents the alkyl group from the fatty acid.

In a preferred embodiment, one or more of the hydrocarbon resins or plasticizers are hydrogenated and/or aromatically modified.

In a preferred embodiment, the hydrocarbon resin has a polydispersity index within a range of 1 to 5, preferably 1 to 2, or even more preferably 1.5 to 1.8.

In a preferred embodiment, the styrene-butadiene rubber is at least partially hydrogenated or at least partially saturated.

In a preferred embodiment, the rubber composition comprises from 0 phr to 30 phr of oil, or from 5 phr to 30 phr of oil, or preferably from 10 phr to 25 phr of oil.

In a preferred embodiment, the rubber composition comprises less than 10 phr of oil, or from 5 to 10 phr of oil.

In a preferred embodiment, the oil is selected from one or more of paraffinic oils, aromatic oils, and naphthenic oils.

In a preferred embodiment, the rubber composition has a hydrocarbon resin to oil ratio larger than 2:1, or larger than 5:1, preferably within a range of 30:1 to 2:1, or preferably within a range of 20:1 to 3:1.

In a preferred embodiment, the rubber composition includes at least one and/or one additional diene-based rubber or in other words elastomer. Representative synthetic polymers may be the homopolymerization products of 1,3-butadiene and its homologues and derivatives, for example, methylbutadiene, dimethylbutadiene and pentadiene as well as copolymers such as those formed from butadiene or its homologues or derivatives with other unsaturated monomers. Among the latter may be acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g. acrolein, methyl isopropenyl ketone and vinylethyl ether. Specific examples of synthetic rubbers include neoprene (polychloroprene), polybutadiene (including cis 1,4-polybutadiene), polyisoprene (including cis 1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Preferred rubber or elastomers may be in general natural rubber, synthetic polyisoprene, polybutadiene and SBR including SSBR.

In a preferred embodiment, the composition comprises at least two diene-based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers. In some embodiments, the partially saturated elastomer may also be a diene-based polymer.

In another embodiment, an emulsion polymerization derived styrene/butadiene (ESBR) may be used having a styrene content of 20 to 35 percent bound styrene or, for some applications, an ESBR having a medium to relatively high bound styrene content, namely a bound styrene content of 30 to 45 percent. By emulsion polymerization prepared ESBR, it may be meant that styrene and 1,3-butadiene are copolymerized as an aqueous emulsion. Such are well known to those skilled in such art. The bound styrene content can vary, for example, from 5 to 50 percent. In one aspect, the ESBR may also contain acrylonitrile to form a terpolymer rubber, as ESBR, in amounts, for example, of 2 to 30 weight percent bound acrylonitrile in the terpolymer. Emulsion polymerization prepared styrene/butadiene/acrylonitrile copolymer rubbers containing 2 to 40 weight percent bound acrylonitrile in the copolymer may also be contemplated as diene-based rubbers.

In another embodiment, solution polymerization prepared SBR (SSBR) may be used. Such an SSBR may for instance have a bound styrene content in a range of 5 to 50 percent, in this case preferably 3 to 25 percent, which corresponds to a relatively low styrene content. The SSBR can be conveniently prepared, for example, by anionic polymerization in an inert organic solvent. More specifically, the SSBR can be synthesized by copolymerizing styrene and 1,3-butadiene monomer in a hydrocarbon solvent utilizing an organo lithium compound as the initiator.

In a preferred embodiment, a synthetic or natural polyisoprene rubber is used. Synthetic cis 1,4-polyisoprene and cis 1,4-polyisoprene natural rubber are as such well known to those having skill in the rubber art. The cis 1,4-content is preferably at least 90%, more preferably at least 95%.

In a preferred embodiment, cis 1,4-polybutadiene rubber (BR or PBD) is used. Suitable polybutadiene rubbers may be prepared, for example, by organic solution polymerization of 1,3-butadiene. The BR may be conveniently characterized, for example, by having at least a 90 percent cis 1,4-content ("high cis" content). Suitable polybutadiene rubbers are available commercially, such as Budene^{®} 1207, Budene^{®} 1208, Budene^{®} 1223, or Budene^{®} 1280 from The Goodyear Tire & Rubber Company. These high cis-1,4-polybutadiene rubbers can for instance be synthesized utilizing nickel catalyst systems which include a mixture of (1) an organonickel compound, (2) an organoaluminum compound, and (3) a fluorine containing compound as described in United States Patent 5,698,643 and United States Patent 5,451,646.

The term "phr" as used herein, and according to conventional practice, refers to "parts by weight of a respective material per 100 parts by weight of rubber, or elastomer". In general, using this convention, a rubber composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber. In an example, the composition may further comprise from 1 phr to 10 phr, optionally from 1 phr to 5 phr, of one or more additional diene-based rubbers, such as SBR, SSBR, ESBR, PBD/BR, NR and/or synthetic polyisoprene. In another example, the composition may include less than 5, preferably less than 3, phr of an additional diene-based rubber or be also essentially free of such an additional diene-based rubber. The terms "compound" and "composition" may be used herein interchangeably, unless indicated otherwise.

In a preferred embodiment, the rubber composition comprises oil, in particular processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils may include various oils as are known in the art, including aromatic, paraffinic, naphthenic, vegetable oils, and low PCA oils, such as MES, TDAE, SRAE and heavy naphthenic oils. Suitable low PCA oils may include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

As described herein, the rubber composition comprises silica. Commonly employed siliceous pigments which may be used in the rubber compound include for instance conventional pyrogenic and precipitated siliceous pigments. In a preferred embodiment, precipitated silica is used. The conventional siliceous pigments may be precipitated silicas such as, for example, those obtained by the acidification of a soluble silicate, e.g., sodium silicate. Such conventional silicas might be characterized, for example, by having a BET surface area as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930). The conventional silica may also be characterized by having a dibutylphthalate (DBP) absorption value in a range of 100 to 400, alternatively 150 to 300. A conventional silica might be expected to have an average ultimate particle size, for example, in the range of 0.01 to 0.05 micron as determined by the electron microscope, although the silica particles may be even smaller, or possibly larger, in size. Various commercially available silicas may be used, such as silicas commercially available from PPG Industries under the Hi-Sil trademark with designations 210, 315G, and EZ160G; silicas available from Solvay, with, for example, designations of Z1165MP and Premium200MP; and silicas available from Evonik AG with, for example, designations VN2 and Ultrasil 6000GR, 9100GR.

In a preferred embodiment, the rubber composition includes also carbon black as one of the filler materials. Preferred amounts in this application range from 1 phr to 10 phr, preferably from 1 phr to 5 phr. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades. These carbon blacks have iodine absorptions ranging from 9 g/kg to 145 g/kg and a DBP number ranging from 34 cm³/100 g to 150 cm³/100 g.

In another embodiment, other fillers may be used in the rubber composition including particulate fillers including ultra-high molecular weight polyethylene (UHMWPE), crosslinked particulate polymer gels including those disclosed in United States Patent 6,242,534, United States Patent 6,207,757, United States Patent 6,133,364, United States Patent 6,372,857, United States Patent 5,395,891 or United States Patent 6,127,488, and a plasticized starch composite filler including but not limited to that disclosed in United States Patent 5,672,639. Such other fillers may be used in an amount ranging from 1 phr to 10 phr.

Also, metal oxides may be used, such as aluminum hydroxide. They may for instance be included within a range of 5 phr to 50 phr.

In one embodiment, the rubber composition may contain a conventional sulfur containing organosilicon compounds or silanes. Examples of suitable sulfur containing organosilicon compounds are of the formula:

Z - Alk - Sₙ - Alk - Z I

in which Z is selected from the group consisting of 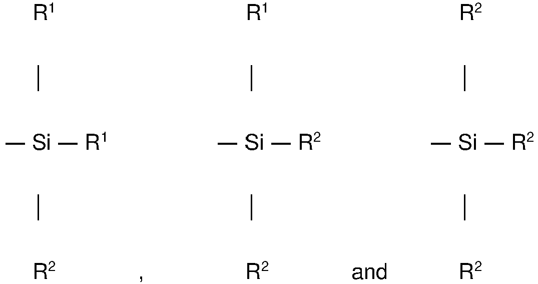
where R¹ is an alkyl group of 1 to 4 carbon atoms, cyclohexyl or phenyl; R² is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 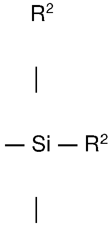 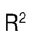
where R² is an alkoxy of 2 to 4 carbon atoms, alternatively 2 carbon atoms; Alk is a divalent hydrocarbon of 2 to 4 carbon atoms, alternatively with 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Publication No. 2003/0130535. In one embodiment, the sulfur containing organosilicon compound is Si-363 from Degussa. The amount of the sulfur containing organosilicon compound in a rubber composition may vary depending on the level of other additives that are used. Generally speaking, the amount of the compound may range from 0.5 phr to 20 phr. In one embodiment, the amount will range from 1 phr to 10 phr.

It is readily understood by those having skill in the art that the rubber composition may be compounded by methods generally known in the rubber compounding art, such as mixing the various sulfur-vulcanizable constituent rubbers with various commonly used additive materials such as, for example, sulfur donors, curing aids, such as activators and retarders, and processing additives, such as oils, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively within a range of from 1.5 phr to 6 phr. Typical amounts of tackifier resins, if used, comprise for example 0.5 phr to 10 phr, usually 1 phr to 5 phr. Typical amounts of processing aids, if used, comprise for example 1 phr to 50 phr (this may comprise in particular oil). Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, may for example comprise 1 phr to 5 phr. Often microcrystalline waxes are used. Typical amounts of peptizers, if used, may for instance comprise 0.1 phr to 1 phr. Typical peptizers may be, for example, pentachlorothiophenol and dibenzamidodiphenyl disulfide.

Accelerators may be preferably but not necessarily used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients may be typically mixed in at least two stages, namely, at least one nonproductive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). In an embodiment, the rubber composition may be subjected to a thermomechanical mixing step. The thermomechanical mixing step generally comprises a mechanical working in a mixer or extruder for a period of time, for example suitable to produce a rubber temperature which is within the range of 140°C to 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire (or in other words tire components). For example, the rubber component may be a tread (including tread cap and tread base), sidewall, apex, chafer, sidewall insert, wirecoat or innerliner. However, tread rubber applications are the preferred applications for the present invention.

In a second aspect of the present invention, a tire is provided comprising the disclosed rubber composition. The tire may be an uncured tire or cured tire, i.e., a vulcanized tire.

In a preferred embodiment, a tire comprises a tread cap comprising the rubber composition. In one embodiment, the tire has a radially outer tread cap layer, intended to come into contact with the road when driving, comprising the rubber composition.

The tire of the present invention may for example be a pneumatic tire or nonpneumatic tire, a race tire, a passenger tire, an aircraft tire, an agricultural tire, an earthmover tire, an off-the-road (OTR) tire, a truck tire or a motorcycle tire. The tire may also be a radial or bias tire.

In a preferred embodiment, the tire is one or more of a winter tire, an all-season tire, and a tire having the three peak mountain snow flake (3PMSF) symbol.

Vulcanization of the pneumatic tire of the present invention may for instance be carried out at conventional temperatures which are within the range of 100°C to 200°C. In one embodiment, the vulcanization is conducted at temperatures which are within the range of 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

Multiple aspects, embodiments and features mentioned herein may be combined with one another.

### Detailed Description of Preferred Embodiments of the Invention

In order to demonstrate the technical effects of an embodiment of the present invention, two different rubber compositions have been prepared. Both compositions comprise a SSBR which has been functionalized for the coupling to silica and a polybutadiene. The Inventive Example comprises a composition comprising amino fatty acids and fatty acid amides, whereas the Comparative Example does not comprise such a composition. While the Comparative Example is mentioned herein to demonstrate the effects of the provision of amino fatty acids or fatty acid amides in a rubber composition, it is not necessarily deemed state of the art. As shown in the compositions according to Table 1, preferably the rubber matrix does not comprise only one diene-based elastomer, such as a SSBR. The resin used in both compositions of Table 1 is a plasticizing DCPD resin. In particular, the compositions comprise herein relatively high amounts of resin (amongst others for traction and plasticizing purposes). Oil, especially vegetable oil, is also present but in a far lower amount than the plasticizing resin. With regard to fillers, both compounds comprise only a small amount of carbon black and a relatively high amount of silica of 140 phr. In further inventive examples of the inventors, the silica amount was even higher such as 150 phr, 155 phr, 160 phr or even 165 phr. The positive effect of the invention is also present for such higher silica amounts. The remaining ingredients of the composition according to the Comparative Example and the Inventive Example are shown in Table 1 below.

**TABLE 1**

| | **Sample** (amounts in phr) | |
|---|---|---|
| **Ingredient** | **Comparative Example** | **Inventive Example** |
| SBR¹ | 42 | 42 |
| BR² | 60 | 60 |
| Resin³ | 62 | 62 |
| Silica⁴ | 140 | 140 |
| Rosin | 3 | 3 |
| Silane⁵ | 8.8 | 8.8 |
| Oil⁶ | 10 | 10 |
| Amino fatty acids⁷ | 0 | 3 |
| Waxes | 3 | 3 |
| Antidegradants⁸ | 3.5 | 3.5 |
| Zinc Oxide | 2.5 | 2.5 |
| Stearic Acid | 2 | 2 |
| Accelerators⁹ | 5.8 | 6 |
| Sulfur donor¹⁰ | 2 | 2 |
| Sulfur | 1.25 | 1.25 |

| | |
|---|---|
| ¹ | Solution-polymerized styrene butadiene rubber having a Tg of -60°C, a styrene content of 15 wt%, vinyl content of 26 wt%, 2 phr of extension oil, Mw of 860k g/mol, end-chain functionalized for the coupling to silica |
| ² | Polybutadiene having a Tg of -108°C as Budene 1223 of Goodyear Chemical |
| ³ | C9 modified and hydrogenated DCPD resin having a Tg of 56°C as Oppera 383 from Exxon Mobil |
| ⁴ | Precipitated silica having a BET NSA of 125 m²/g |
| ⁵ | Bis-triethoxysilylpropyl-disulfide as SI 266^{™} of the company Evonik |
| ⁶ | Sunflower oil as Agripure AP-65 from Cargill |
| ⁷ | as HT257 from Schill & Seilacher |
| ⁸ | Phenylene diamines types |
| ⁹ | Diphenylguanidine and sulfenamide types |
| ¹⁰ | Bis-triethoxysilylpropyl tetrasulfide on a N330 carbon black carrier as X50S from Evonik |

Measurements of physical properties have been carried out for the Inventive Example and the Comparative Example.

While it is known in the art that fatty acids may have a plasticizing effect to a rubber composition and may thus be used as process aids, it has surprisingly been found by the inventors that amino fatty acids and fatty acid amides have also a considerable positive effect on the tensile strength of a rubber composition.

As shown below in Table 2, the tensile strength of the Inventive Example has been increased by more than 5% by adding only a relatively small amount of amino fatty acids and fatty acid amides. At the same time elongation at break has also been improved by more than 5%. Thus, the robustness of the rubber composition has been improved, e.g., with respect to chipping and flaking behavior of the rubber compound.

At the same time the rebound value at 100°C, which can be considered as a hysteresis or rolling resistance indicator has increased (i.e., by about 3%) which is a hint for a slight improvement in rolling resistance. In other words, a higher rebound value at 100°C indicates a reduced hysteresis and/or lower rolling resistance.

Moreover, the rebound values measured at 0°C have decreased for the Inventive Example compared to the Comparative Example. At such low temperatures a lower rebound value can be considered as an indicator for an improved wet traction and/or wet performance of the rubber compound. Thus, as shown in Table 2, the rebound value at 0°C was decreased by almost 5% which is an indicator of improvement of the wet performance characteristics of tires having treads made with the inventive formulation.

The abrasion of the Inventive Example could be kept at a reasonable level over the Comparative Example.

Overall, the balance of properties of the Inventive Example was improved over the balance of properties of the Comparative Example.

**TABLE 2**

| **Test/Property** | **Comparative Example** | **Inventive Example** |
|---|---|---|
| Tensile strength (MPa)^{a} | 11.9 | 12.5 |
| Elongation at Break (%)^{a} | 476 | 503 |
| Rebound (100°C)^{b} | 50.8 | 52.5 |
| Rebound (0°C)^{b} | 13.4 | 12.8 |
| Abrasion (%)^{c} | 100 | 92 |

| | |
|---|---|
| ^{a} | Tensile strength and elongation at break have been determined by a ring sample test based on ASTM D412 or equivalent, percentages are percentages of elongation, respectively strain; tensile strength is stress at break; elongation is elongation at break in percent. |
| ^{b} | Rebound measured on a Zwick Roell 5109 rebound resilience tester according to DIN 53512 at given temperature. |
| ^{c} | Rotary drum abrasion test according to ASTM D5963 or equivalent, wherein abrasion has been normalized to the Example and wherein higher is better. |

## Claims

1. A rubber composition comprising:
30 to 100 phr of at least one styrene-butadiene rubber;
0 to 70 phr of at least one additional diene-based elastomer;
from 40 to 80 phr of a hydrocarbon resin; and
at least 0.1 phr of at least one member selected from the group consisting of amino fatty acids and fatty acid amides;
**characterized in that** the rubber composition further comprises:
130 phr to 200 phr or 140 phr to 200 phr of silica; and
5 to 30 phr of at least one liquid plasticizer.

2. The rubber composition according to claim 1, wherein the styrene-butadiene rubber is functionalized for coupling to silica; and/or wherein the rubber composition comprises from 30 to 75 phr of the styrene-butadiene rubber and from 25 to 70 phr of the at least one additional diene-based elastomer selected from the group consisting of polybutadiene rubber, synthetic polyisoprene rubber and natural rubber.

3. The rubber composition according to at least one of the previous claims, wherein the rubber composition comprises a total of from 0.2 phr to 10 phr of said one or more of amino fatty acids and fatty acid amides.

4. The rubber composition according to at least one of the previous claims, wherein the styrene-butadiene rubber has a glass transition temperature within a range of from -50°C to - 86°C.

5. The rubber composition according to at least one of the previous claims, wherein the additional diene based elastomer is a polybutadiene rubber having a glass transition temperature within a range of from -90°C to -115°C.

6. The rubber composition according to at least one of the previous claims, wherein the hydrocarbon resin is one or more members selected from the group consisting of aliphatic (C5) resins, aromatic (C9) resins, cyclopentadiene resins, dicyclopentadiene resins, coumarone indene resins, terpene resins, alpha methyl styrene resins, and terpene phenol resins.

7. The rubber composition according to claim 1, wherein the at least one liquid plasticizer is chosen from one or more of oil and liquid polymer; and/or wherein the ratio of the hydrocarbon resin to the one or more liquid plasticizers is at least 2:1.

8. The rubber composition according to at least one of the previous claims, wherein the rubber composition comprises at least 5 phr of a vegetable oil having a glass transition temperature within a range of from -75°C to -90°C.

9. The rubber composition according to at least one of the previous claims, wherein the hydrocarbon resin has a weight average molecular weight within a range of from 500 g/mol to 1600 g/mol.

10. The rubber composition according to at least one of the previous claims, wherein the rubber composition comprises a plasticizer composition comprising (i) the one or more of amino fatty acids and fatty acid amides and (ii) fatty acids, and wherein said plasticizer composition has one of: an acid number within a range of 50 to 200 mg KOH/g, an acid number within a range of 90 to 200 mg KOH/g, and a dropping point within the range of 50°C to 100°C.

11. The rubber composition according to at least one of the previous claims, wherein the amino fatty acids are based on the reaction of fatty acids with amino acids, and, optionally, wherein the amino acids are selected from the group consisting of glycine, alanine, valine, leucine, isoleucine, and proline.

12. The rubber composition according to at least one of the previous claims, wherein the fatty acid amides are based on the reaction of fatty acids with amines, and, optionally, wherein the fatty acids are selected from the group consisting of caprylic acid, capric acid, lauric acid, myristic acid, palmitic acid, stearic acid, arachidic acid, behenic acid, lignoceric acid and cerotic acid.

13. A tire comprising the rubber composition according to at least one of the previous claims.

14. The tire according to claim 13, wherein the tire is one or more of a winter tire, an all-season tire, and a tire having a three peak mountain snow flake (3PMSF) symbol on its sidewall.

## Patentansprüche

1. Kautschukzusammensetzung, die Folgendes umfasst:
30 bis 100 ThK mindestens eines Styrol-Butadien-Kautschuks;
0 bis 70 ThK mindestens eines weiteren Elastomers auf Basis von Dien;
von 40 bis 80 ThK eines Kohlenwasserstoffharzes; und
mindestens 0,1 ThK mindestens eines Elements, das aus der Gruppe ausgewählt ist, die aus Aminofettsäuren und Fettsäureamiden besteht;
**dadurch gekennzeichnet, dass** die Kautschukzusammensetzung ferner Folgendes umfasst:
130 ThK bis 200 ThK oder 140 ThK bis 200 ThK Silica; und
5 bis 30 ThK mindestens eines flüssigen Weichmachers.

2. Kautschukzusammensetzung nach Anspruch 1, wobei der Styrol-Butadien-Kautschuk zum Zwecke der Kopplung an Silica funktionalisiert ist; und/oder wobei die Kautschukzusammensetzung 30 bis 75 phr des Styrol-Butadien-Kautschuks und 25 bis 70 phr des mindestens einen zusätzlichen Elastomers auf Basis von Dien umfasst, das aus der Gruppe ausgewählt ist, die aus einem Polybutadien-Kautschuk, einem synthetischen Polyisopren-Kautschuk und Naturkautschuk besteht.

3. Kautschukzusammensetzung nach mindestens einem der oben genannten Ansprüche, wobei die Kautschukzusammensetzung insgesamt 0,2 phr bis 10 phr der oben genannten einen oder mehreren Aminofettsäuren und Fettsäureamiden umfasst.

4. Kautschukzusammensetzung nach mindestens einem der vorstehenden Ansprüche, wobei der Styrol-Butadien-Kautschuk eine Glasübergangstemperatur aufweist, die in dem Bereich von -50 °C bis -86 °C liegt.

5. Kautschukzusammensetzung nach mindestens einem der vorstehenden Ansprüche, wobei das zusätzliche Elastomer auf Basis von Dien ein Polybutadien-Kautschuk darstellt, das eine Glasübergangstemperatur aufweist, die in dem Bereich von -90 °C bis -115 °C liegt.

6. Kautschukzusammensetzung nach mindestens einem der vorstehenden Ansprüche, wobei das Kohlenwasserstoffharz einen oder mehrere Elemente darstellt, die aus der Gruppe ausgewählt sind, die aus aliphatischen Harzen (C5), aromatischen Harzen (C9), Cyclopentadien-Harzen, Dicyclopentadien-Harzen, Cumaron-Inden-Harzen, Terpen-Harzen, Alpha-Methylstyrol-Harzen und Phenol-Terpen-Harzen.

7. Kautschukzusammensetzung nach Anspruch 1, wobei der mindestens eine flüssige Weichmacher aus einem oder mehreren von Öl und flüssigem Polymer ausgewählt ist, und/oder das Verhältnis zwischen dem Kohlenwasserstoffharz und den oben genannten einen oder mehreren flüssigen Weichmachern mindestens 2:1 beträgt.

8. Kautschukzusammensetzung nach mindestens einem der vorstehenden Ansprüche, wobei die Kautschukzusammensetzung mindestens 5 ThK eines Pflanzenöls umfasst, das eine Glasübergangstemperatur aufweist, die in dem Bereich von -75 °C bis -90 °C liegt.

9. Kautschukzusammensetzung nach mindestens einem der vorstehenden Ansprüche, wobei das Kohlenwasserstoffharz ein gewichtsmittleres Molekulargewicht aufweist, das in dem Bereich von 500 g/mol bis 1600 g/mol liegt.

10. Kautschukzusammensetzung nach mindestens einem der oben genannten Ansprüche, wobei die Kautschukzusammensetzung eine Weichmacherzusammensetzung umfasst, die Folgendes beinhaltet: (i) die oben genannten einen oder mehreren Aminofettsäuren und Fettsäureamide und (ii) Fettsäuren; und wobei die Kautschukzusammensetzung eines der folgenden Elemente aufweist, das aus einer Säurezahl, die in einem Bereich von 50 bis 200 mg KOH/g liegt, einer Säurezahl, die in einem Bereich von 90 bis 200 mg KOH/g, und einem Tropfpunkt, der in dem Bereich von 50 °C bis 100 °C liegt, ausgewählt ist.

11. Kautschukzusammensetzung nach mindestens einem der vorstehenden Ansprüche, wobei die Aminofettsäuren auf Basis einer Umsetzung von Fettsäuren mit Aminosäuren beruhen; und wobei die Aminosäuren optional aus der Gruppe ausgewählt sind, die aus Glycin, Alanin, Valin, Leucin, Isoleucin und Prolin besteht.

12. Kautschukzusammensetzung nach mindestens einem der vorstehenden Ansprüche, wobei die Fettsäureamide auf Basis einer Umsetzung von Fettsäuren mit Aminen beruhen; und wobei die Fettsäuren optional aus der Gruppe ausgewählt sind, die aus der Caprylsäure, der Caprinsäure, der Laurinsäure, der Myristinsäure, der Palmitinsäure, der Stearinsäure, der Arachinsäure, der Behensäure, der Lignocerinsäure und der Cerotinsäure besteht.

13. Reifen, der die Kautschukzusammensetzung nach mindestens einem der vorstehenden Ansprüche umfasst.

14. Reifen nach Anspruch 13, wobei der Reifen einen oder mehrere Reifen darstellt, die aus einem Winterreifen, einem Ganzjahresreifen und einem Reifen, der auf seiner Seitenwand ein Schneeflockensymbol mit drei Berggipfeln (3PMSF) aufweist, ausgewählt sind.

## Revendications

1. Composition de caoutchouc qui comprend :
de 30 à 100 phr d'au moins un caoutchouc de styrène-butadiène ;
de 0 à 70 phr d'au moins un élastomère supplémentaire à base d'un diène ;
de 40 à 80 phr d'une résine d'hydrocarbure ; et
au moins 0,1 phr d'au moins un élément qui est choisi parmi le groupe qui est constitué par des acides gras aminés et par des amides d'acides gras ;
**caractérisé en ce que** la composition de caoutchouc comprend en outre :
de 130 phr à 200 phr ou de 140 phr à 200 phr de silice ; et
de 5 à 30 phr d'au moins un plastifiant liquide.

2. Composition de caoutchouc selon la revendication 1, dans laquelle le caoutchouc de styrène-butadiène est fonctionnalisé à des fins de couplage à de la silice ; et/ou dans laquelle la composition de caoutchouc comprend de 30 à 75 phr du caoutchouc de styrène-butadiène et de 25 à 70 phr dudit au moins un élastomère supplémentaire à base d'un diène qui est choisi parmi le groupe qui est constitué par un caoutchouc de polybutadiène, un caoutchouc de polyisoprène synthétique et du caoutchouc naturel.

3. Composition de caoutchouc selon au moins une des revendications précédentes, dans laquelle la composition de caoutchouc comprend un total de 0,2 phr à 10 phr desdits un ou plusieurs acides gras aminés et amides d'acides gras.

4. Composition de caoutchouc selon au moins une des revendications précédentes, dans laquelle le caoutchouc de styrène-butadiène possède une température de transition vitreuse qui se situe au sein d'une plage allant de -50 °C à -86 °C.

5. Composition de caoutchouc selon au moins une des revendications précédentes, dans laquelle l'élastomère supplémentaire à base d'un diène représente un caoutchouc de polybutadiène qui possède une température de transition vitreuse qui se situe au sein d'une plage allant de -90 °C à -115 °C.

6. Composition de caoutchouc selon au moins une des revendications précédentes, dans laquelle la résine d'hydrocarbure représente un ou plusieurs éléments qui sont choisis parmi le groupe qui est constitué par des résines aliphatiques (en C5), des résines aromatiques (en C9), des résines de cyclopentadiène, des résines de dicyclopentadiène, des résines de coumarone indène, des résines terpéniques, des résines d'alpha méthyl styrène et des résines terpéniques de phénol.

7. Composition de caoutchouc selon la revendication 1, dans laquelle ledit au moins un plastifiant liquide est choisi à partir d'un ou de plusieurs éléments, à savoir une huile et un polymère liquide et/ou le rapport entre la résine d'hydrocarbure et lesdits un ou plusieurs plastifiants liquides s'élève à au moins 2:1.

8. Composition de caoutchouc selon au moins une des revendications précédentes, dans laquelle la composition de caoutchouc comprend au moins 5 phr d'une huile végétale qui possède une température de transition vitreuse qui se situe au sein d'une plage allant de -75 °C à -90 °C.

9. Composition de caoutchouc selon au moins une des revendications précédentes, dans laquelle la résine d'hydrocarbure possède un poids moléculaire moyen en poids qui se situe au sein d'une plage allant de 500 g/mol à 1600 g/mol.

10. Composition de caoutchouc selon au moins une des revendications précédentes, dans laquelle la composition de caoutchouc comprend une composition de plastifiant qui comprend (i) lesdits un ou plusieurs acides gras aminés et amides d'acides gras et (ii) des acides gras ; et dans laquelle ladite composition de caoutchouc possède un des éléments suivants choisi parmi : un indice d'acidité qui se situe au sein d'une plage allant de 50 à 200 mg KOH/g ; un indice d'acidité qui se situe au sein d'une plage allant de 90 à 200 mg KOH/g ; et un point de goutte qui se situe au sein d'une plage allant de 50 °C à 100 °C.

11. Composition de caoutchouc selon au moins une des revendications précédentes, dans laquelle les acides gras aminés sont à base d'une mise en réaction d'acides gras avec des acides aminés ; et dans laquelle, de manière facultative, les acides aminés sont choisis parmi le groupe qui est constitué par la glycine, l'alanine, la valine, la leucine, l'isoleucine et la proline.

12. Composition de caoutchouc selon au moins une des revendications précédentes, dans laquelle les amides d'acides gras sont à base d'une mise en réaction d'acides gras avec des amines ; et dans laquelle, de manière facultative, les acides gras sont choisis parmi le groupe qui est constitué par l'acide caprylique, l'acide caprique, l'acide laurique, l'acide myristique, l'acide palmitique, l'acide stéarique, l'acide arachidique, l'acide béhénique, l'acide lignocérique et l'acide cérotique.

13. Bandage qui comprend la composition de caoutchouc selon au moins une des revendications précédentes.

14. Bandage selon la revendication 13,, dans lequel le bandage représente un ou plusieurs bandages choisis parmi un bandage d'hiver, un bandage toutes saisons et un bandage qui possède un symbole de la montagne à trois pics contenant un flocon de neige (3PMSF) sur son flanc.
